Europäisches Patentamt

European Patent Office

Office européen des brevets

(11) Numéro de publication : **0 423 097 B1**

# (12) FASCICULE DE BREVET EUROPEEN

(45) Date de publication du fascicule du brevet :
24.11.93 Bulletin 93/47

(21) Numéro de dépôt : **90870164.2**

(22) Date de dépôt : **04.10.90**

(51) Int. Cl.⁵ : **C08F 2/00**, C08F 14/22

(54) Procédé pour réduire le croûtage des réacteurs en cours de polymérisation du fluorure de vinylidène dans un milieu aqueux de mise en suspension.

(30) Priorité : **09.10.89 FR 8913247**

(43) Date de publication de la demande :
**17.04.91 Bulletin 91/16**

(45) Mention de la délivrance du brevet :
**24.11.93 Bulletin 93/47**

(84) Etats contractants désignés :
**AT BE CH DE DK ES FR GB GR IT LI LU NL SE**

(56) Documents cités :
**EP-A- 0 001 397**
**GB-A- 2 206 122**
**US-A- 3 781 265**

(73) Titulaire : **SOLVAY (Société Anonyme)**
**Rue du Prince Albert, 33**
**B-1050 Bruxelles (BE)**

(72) Inventeur : **Lasson, Pierre**
**Avenue des Liserons 31/16**
**B-1020 Bruxelles (BE)**

(74) Mandataire : **Marckx, Frieda et al**
**Solvay Département de la Propriété**
**Industrielle 310, rue de Ransbeek**
**B-1120 Bruxelles (BE)**

EP 0 423 097 B1

## Description

La présente invention concerne un procédé pour réduire le croûtage des réacteurs en cours de polymérisation du fluorure de vinylidène dans un milieu aqueux de mise en suspension à l'intervention d'un initiateur oléosoluble de la polymérisation radicalaire et en présence d'un agent de mise en suspension du type des éthers cellulosiques.

Il est connu de polymériser le fluorure de vinylidène dans un milieu aqueux de mise en suspension à l'intervention d'un initiateur oléosoluble de la polymérisation radicalaire et en présence d'un agent de mise en suspension du type des éthers cellulosiques. A titre d'exemples d'éthers cellulosiques couramment recommandés et utilisés en tant qu'agent de mise en suspension dans la polymérisation du fluorure de vinylidène, on peut citer la méthylcellulose et la méthylhydroxypropylcellulose. La polymérisation est en général réalisée en discontinu dans des réacteurs à cuve pourvus d'un agitateur à pales, sabre ou turbine. Dans cette technique de polymérisation connue, il se produit au cours de la polymérisation des dépôts solides de polymère, se présentant sous la forme de films adhérents, sur les surfaces internes des réacteurs (cuves, agitateurs, toits). De plus, dans les zones non agitées des réacteurs se forment habituellement des dépôts de polymère formant des blocs durs (carottes) qu'il convient d'éliminer par curetage manuel. C'est le phénomène que l'on appelle "croûtage". Ce croûtage est extrêmement dommageable. En effet, les dépôts sur la cuve ont pour résultat de diminuer les quantités de calories qu'il est possible d'évacuer par les doubles enveloppes des réacteurs avec comme conséquence une diminution de la productivité des réacteurs. En outre, les dépôts se détachent fréquemment en cours de polymérisation et contaminent les polymères que l'on obtient finalement. Enfin, la formation de ces dépôts, qui apparaissent toujours de manière aléatoire, rend plus difficile la conduite et le contrôle des réactions de polymérisation.

C'est pourquoi il est indispensable de nettoyer les réacteurs de manière très soignée entre chaque cycle de polymérisation. Ce nettoyage est opéré habituellement au moyen de solvants chauds, de dispositifs mécaniques tels que des lances à eau ou encore manuellement. Il s'agit toujours d'une opération longue, pénible et coûteuse en matière, énergie et main-d'oeuvre.

On a déjà proposé divers moyens pour réduire le croûtage des réacteurs en cours de polymérisation en milieu aqueux des monomères vinyliques et vinylidéniques. Ces moyens consistent généralement à revêtir les parois des réacteurs d'agents anti-croûtants ou à les incorporer dans le milieu de polymérisation. Ces agents anti-croûtants ont le plus souvent, soit un effet réducteur, soit un effet inhibiteur sur la polymérisation radicalaire. Ces moyens de l'art antérieur présentent en outre l'inconvénient de contribuer à la contamination des polymères produits.

La présente invention procure un procédé simple, efficace et économique pour réduire le croûtage des réacteurs utilisés à la polymérisation du fluorure de vinylidène dans un milieu aqueux de mise en suspension qui ne présente pas les inconvénients des procédés de l'art antérieur et qui, en particulier, ne contribue pas à la contamination des résines résultant habituellement de l'incorporation dans le milieu de polymérisation d'agents étrangers à la polymérisation et qui n'influe pas non plus sur la productivité des réacteurs.

La présente invention procure à cet effet un procédé pour réduire le croûtage des réacteurs en cours de polymérisation du fluorure de vinylidène dans un milieu aqueux de mise en suspension à l'intervention d'un initiateur oléosoluble de la polymérisation radicalaire et en présence d'un agent de mise en suspension du type des éthers cellulosiques dans lequel l'agent de mise en suspension est une méthylhydroxyéthylcellulose.

Un effet surprenant de la présente invention réside dans le fait que l'utilisation de méthylhydroxyéthylcellulose à titre d'agent de mise en suspension en lieu et place des éthers cellulosiques usuellement recommandés pour la polymérisation du fluorure de vinylidène dans un milieu aqueux de mise en suspension procure une réduction très appréciable du croûtage des parois des réacteurs de polymérisation, sans aucunement affecter les propriétés des polymères du fluorure de vinylidène résultants, ni la productivité des réacteurs.

Les méthylhydroxyéthylcelluloses sont des dérivés cellulosiques connus en eux-mêmes. On les caractérise habituellement par le nombre moyen de moles de réactif de méthoxylation combiné avec la cellulose par unité d'anhydroglucose, généralement désigné par l'abréviation "D.S." (degré de substitution), ainsi que par le nombre moyen de moles de réactif d'hydroxyéthylation combiné avec la cellulose par unité d'anhydroglucose, généralement désigné par l'abréviation "M.S." (substitution molaire).

La nature des méthylhydroxyéthylcelluloses n'est pas particulièrement critique. Conviennent particulièrement pour la réalisation du procédé selon l'invention, les méthylhydroxyéthylcelluloses présentant un nombre D.S. allant de 1,20 à 1,80 et un nombre M.S. allant de 0,10 à 0,30. Des méthylhydroxyéthylcelluloses tout particulièrement préférées sont celles qui présentent un nombre D.S. allant de 1,40 à 1,60 et un nombre M.S. allant de 0,13 à 0,27.

La quantité de méthylhydroxyéthylcellulose à mettre en oeuvre dans le procédé selon l'invention n'est pas critique. Des quantités aussi faibles que 0,05 pour mille en poids par rapport à la quantité totale de monomère mise en oeuvre procurent déjà un effet notable sur la réduction du croûtage. L'augmentation de la concentration en méthylhydroxyéthylcellulose accentue encore cet effet. Toutefois, dans la mesure où des concentrations égales aux concentrations usuelles en agent de mise en suspension sont efficaces pour réduire substantiellement, voire supprimer le croûtage, il est généralement recommandé d'utiliser l'agent de mise en suspension selon l'invention à raison de 0,1 à 5 pour mille et, plus particulièrement encore, à raison de 0,2 à 2 pour mille en poids par rapport à la quantité totale de monomère mise en oeuvre à la polymérisation.

La viscosité des méthylhydroxyéthylcelluloses n'est pas critique en ce qui concerne leur effet anti-croûtage. Celle-ci peut donc varier dans de très larges proportions. Pour fixer les idées, on peut faire appel à des méthylhydroxyéthylcelluloses dont la viscosité à 20°C en solution aqueuse à 2 % va de 15 à 4000 mPa.s. Néanmoins, on a constaté que la mise en oeuvre d'éthers cellulosiques très visqueux peut provoquer l'apparition d'oeils-de-poisson dans les produits finis. Pour cette raison, on donne la préférence aux méthylhydroxyéthylcelluloses dont la viscosité à 20°C en solution aqueuse à 2 % ne dépasse pas 1500 mPa.s. De même, en vue d'éviter l'obtention de particules très fines, on donne la préférence aux méthylhydroxyéthylcelluloses dont la viscosité à 20°C en solution aqueuse à 2 % est égale à 35 mPa.s au moins. On donne donc la préférence aux méthylhydroxyéthylcelluloses dont la viscosité à 20°C en solution aqueuse à 2 % est comprise entre 35 et 1500 mPa.s et, plus particulièrement encore, entre 50 et 1000 mPa.s.

Le mode de mise en oeuvre de la méthylhydroxyéthylcellulose n'est pas critique. On peut la mettre en oeuvre en totalité au départ de la polymérisation ou encore, pour partie, par portions ou en continu en cours de polymérisation. De préférence, on met en oeuvre la totalité de la méthyléthylhydroxycellulose au départ de la polymérisation et, plus particulièrement, en l'introduisant dans l'eau avant tous les autres ingrédients de la polymérisation (initiateur, monomère, le cas échéant agent régulateur de chaines, etc.)

Dans le procédé selon l'invention, on peut initier la polymérisation à l'intervention des initiateurs oléosolubles usuels de la polymérisation radicalaire du fluorure de vinylidène. Des exemples représentatifs de tels initiateurs sont les peroxydicarbonates de dialkyles, le peroxyde d'acétylcyclohexanesulfonyle, le peroxyde de dibenzoyle, le peroxyde de dicumyle, les perbenzoates de t-alkyle et les perpivalates de t-alkyle. On donne néanmoins la préférence aux peroxydicarbonates de dialkyles, tels que les peroxydicarbonates de diéthyle et de di-isopropyle, et aux perpivalates de t-alkyle, tels que les perpivalates de t-butyle et de t-amyle, et, plus particulièrement encore, aux perpivalates de t-alkyle.

L'initiateur peut être mis en oeuvre en totalité au départ de la polymérisation ou par portions ou en continu en cours de polymérisation.

La quantité d'initiateur oléosoluble mise en oeuvre à la polymérisation n'est pas critique. On peut donc mettre en oeuvre les quantités usuelles d'initiateur, c'est-à-dire d'environ 0,05 à 3 % en poids par rapport au monomère mis en oeuvre et, de préférence d'environ 0,05 à 2,5 % en poids.

Comme évoqué ci-dessus, la polymérisation peut s'effectuer en présence de régulateurs de chaines. A titre d'exemples de régulateurs de chaînes connus du polyfluorure de vinylidène, on peut citer les cétones contenant de trois à quatre atomes de carbone, les alcools saturés contenant de trois à six atomes de carbone, les carbonates de bis(alkyle) dont les groupements alkyles contiennent cinq atomes de carbone au plus. Lorsqu'on fait appel à un régulateur de chaînes, celui-ci est mis en oeuvre en des quantités usuelles. Pour fixer les idées, les agents régulateurs de chaines sont généralement mis en oeuvre à raison d'environ 0,5 à 5 % en poids par rapport au monomère mis en oeuvre.

La température de polymérisation peut se situer indifféremment en dessous ou au-dessus de la température critique du fluorure de vinylidène (30,1°C). Lorsque la température se situe en dessous de 30,1°C, la polymérisation s'effectue au sein d'une suspension aqueuse classique de fluorure de vinylidène liquide sous une pression égale à la pression de vapeur saturante du fluorure de vinylidène. Lorsque la température se situe au-dessus de 30,1°C, elle s'effectue au sein d'une suspension aqueuse de fluorure de vinylidène gazeux se trouvant avantageusement sous pression élevée. On peut donc réaliser le procédé selon l'invention à des températures allant de la température ambiante à environ 110°C. On préfère néanmoins effectuer la polymérisation à une température située au-dessus de 30,1°C. Suivant un mode de réalisation préféré du procédé selon l'invention, on effectue la polymérisation du fluorure de vinylidène à une température comprise entre 35 et 100°C et sous des pressions initiales d'environ 55 à 200 bars. On peut, bien entendu, augmenter la productivité des réacteurs en procédant en cours de polymérisation à des injections supplémentaires de monomère ou d'eau ou à une élévation de la température de polymérisation.

Par polymérisation du fluorure de vinylidène, on entend désigner aux fins de la présente invention, l'homopolymérisation du fluorure de vinylidène, ainsi que la copolymérisation de mélanges de monomères à teneur prépondérante, et de préférence supérieure à 85 % molaires en fluorure de vinylidène, tels que par exemple, des mélanges de fluorure de vinylidène et d'autres oléfines fluorées, telles que le fluorure de vinyle, le trifluoréthylène, le chlorotrifluoréthylène, le tétrafluoréthylène et l'hexafluoropropylène.

Les polymères du fluorure de vinylidène obtenus selon le procédé de l'invention sont isolés, en fin de po-

3

lymérisation, de manière conventionnelle par essorage, suivi de séchage.

Le procédé selon l'invention permet de réduire de manière très substantielle le croûtage des réacteurs utilisés à la polymérisation du fluorure de vinylidène. Cette réduction du croûtage s'observe aisément à l'oeil nu grâce à une brillance supérieure des parois. Dans la plupart des cas, un simple lavage au jet d'eau permet de nettoyer le réacteur en vue d'une polymérisation ultérieure, y compris dans les zones non ou mal agitées.

Les exemples qui suivent sont destinés à illustrer le procédé selon l'invention. Les exemples 3, 2 et 6 illustrent le procédé de l'invention. Les exemples 3 à 5 et 7 sont donnés à titre comparatif. Dans les exemples 1, 2 et 6, on a mis en oeuvre des méthylhydroxyéthylcelluloses. Dans l'exemple 3, de comparaison, on a mis en oeuvre une méthylcellulose; dans l'exemple 4, de comparaison, une méthylhydroxypropylcellulose et dans les exemples 5 et 7, également de comparaison, une éthylhydroxyéthylcellulose. Dans le tableau I en annexe sont rassemblées les caractéristiques des éthers cellulosiques mis en oeuvre dans les exemples 1 à 7. Pour les éthylhydroxyéthylcelluloses, le nombre D.S. représente le nombre moyen de moles de réactif d'éthoxylation combiné avec la cellulose par unité d'anhydroglucose.

Exemples 1 à 5

Dans un réacteur de 4 litres, muni d'un agitateur de type turbine et d'une double enveloppe, on introduit successivement 2480 g d'eau déminéralisée et 33 g d'une solution de dispersant cellulosique à 15 g/l dont la nature et la viscosité sont précisées au Tableau I en annexe. On met en marche l'agitation à 880 t/min. On élimine la plus grande partie de l'oxygène présent dans le réacteur par trois mises sous vide à 40 mbars (à 15°C) avec, après chaque mise sous vide, remise sous pression de 1 bar d'azote. On introduit alors 2,50 g de perpivalate de tert-amyle (initiateur) et 33,44 g de carbonate de bis(éthyle) (régulateur de chaînes). Après 5 minutes, on injecte le fluorure de vinylidène en des quantités précisées au Tableau II sous la dénomination VF$_2$ initial, puis on met progressivement en chauffe le réacteur jusqu'à atteindre un premier palier de température de 52°C, d'une durée d'environ trois heures. On porte ensuite la température à 65°C et on l'y maintient pendant deux heures. En cours de polymérisation, on injecte progressivement du fluorure de vinylidène supplémentaire en des quantités précisées au Tableau II et à une allure telle que la pression ne dépasse jamais 120 bars. En fin de polymérisation, on dégaze la suspension aqueuse (en abaissant la pression jusqu'à la pression atmosphérique) et on lave le polymère sur essoreuse jusqu'à ce que les eaux de lavage ne contiennent plus de mousse. On sèche le polymère en étuve à 60°C jusqu'à poids constant. La durée totale de la polymérisation, ainsi que le taux de conversion sont repris au Tableau II.

Exemples 6 et 7

Dans un réacteur identique à celui décrit ci-dessus, on introduit successivement 2483 g d'eau déminéralisée et 44 g d'une solution de dispersant cellulosique à 15 g/l dont la nature et la viscosité sont précisées au Tableau I. On met en marche l'agitation à 880 t/min. On élimine la plus grande partie de l'oxygène présent dans le réacteur par trois mises sous vide à mbars (à 15°C) avec, après chaque mise sous vide, remise sous pression de 1 bar d'azote. On introduit alors 9,9 g de peroxydicarbonate de di-éthyle (initiateur faisant simultanément office de régulateur de chaînes). Après cinq minutes, on introduit une charge unique de 825 g de fluorure de vinylidène, puis on met progressivement en chauffe le réacteur jusqu'à atteindre un premier palier de température de 40°C, d'une durée de 2 h 30 in. On porte ensuite la température à 50°C et on l'y maintient pendant 1 h 30 min. En fin de polymérisation, on dégaze la suspension aqueuse (en abaissant la pression jusqu'à la pression atmosphérique) et on lave le polymère sur essoreuse jusqu'à ce que les eaux de lavage ne contiennent plus de mousse. On sèche le polymère en étuve à 60°C jusqu'à poids constant. La durée totale de la polymérisation, ainsi que le taux de conversion sont repris au Tableau II.

Le poids spécifique apparent par tassement (PSAT), la dimension moyenne des particules (DMP) et la viscosité intrinsèque des polyfluorures de vinylidène produits selon les exemples 1 à 7 figurent dans le Tableau III en annexe. La viscosité intrinsèque [η] exprimée en l/g, a été calculée à partir de la viscosité spécifique mesurée à 110°C d'une solution à 2 g/l de polyfluorure de vinylidène dans le diméthylformamide suivant la formule :

$$[\eta] = \text{limite de} \left( \frac{\text{viscosité spécifique}}{\text{concentration C}} \right) \text{pour. C} = 0$$

L'inspection des parois internes du réacteur après polymérisation révèle que dans le cas des exemples 1, 2 et 6, selon l'invention, les parois sont brillantes et vierges de tout film adhérent. Un simple lavage au jet d'eau suffit pour nettoyer les parois en vue d'une polymérisation ultérieure. Des polymérisations analogues ont pu être répétées une dizaine de fois avant de nécessiter un nettoyage poussé du réacteur. Dans le cas des exemples 3 à 5 et 7, de comparaison, l'inspection après polymérisation révèle des surfaces ternes recouvertes d'un mince film de polymère adhérent et des carottes dans les zones non ou mal agitées qu'il convient d'éliminer par un nettoyage poussé avant de pouvoir procéder à une nouvelle polymérisation.

La comparaison des résultats des exemples 1 et 2, selon l'invention, avec ceux des exemples 3 à 5, de comparaison, d'une part, et de l'exemple 6, selon l'invention, avec ceux de l'exemple 7, de comparaison, d'autre part montre à suffisance l'efficacité des méthylhydroxyéthylcelluloses pour réduire substantiellement le croûtage des parois des réacteurs sans influer notablement sur les propriétés des polyfluorures de vinylidène produits.

## Tableau I

| No. de l'exemple | Nature | Dispersant cellulosique | | Viscosité (20°C, sol. aq. à 2 %), mPa.S |
|---|---|---|---|---|
| | | D.S. | M.S. | |
| 1 | MHEC | 1,50 | 0,20 | 300 |
| 2 | MHEC | 1,50 | 0,20 | 50 |
| 3 | MC | 1,80 | 0 | 400 |
| 4 | MHPC | 1,80 | 0,13 | 50 |
| 5 | EHEC | 0,90 | 0,80 | 300 |
| 6 | MHEC | 1,50 | 0,20 | 300 |
| 7 | EHEC | 0,90 | 0,80 | 300 |

Tableau II

| No. de l'exemple | Conditions de polymérisation VF$_2$ mis en oeuvre, g | | Durée totale, h, min | Taux de conversion, % |
|---|---|---|---|---|
| | En initial | En cours | | |
| 1 | 962 | 710 | 5 h 14 min | 89 |
| 2 | 970 | 702 | 5 h 20 min | 87 |
| 3 | 966 | 707 | 5 h 23 min | 92 |
| 4 | 970 | 702 | 5 h 15 min | 92 |
| 5 | 958 | 713 | 5 h 25 min | 95 |
| 6 | 825 | 0 | 4 h 19 min | 96 |
| 7 | 827 | 0 | 4 h 17 min | 97 |

Tableau III

| No. de l'exemple | Propriétés des polyfluorures de vinylidène | | |
|---|---|---|---|
| | PSAT, g/cm$^3$ | DMP, µm | Viscosité intrin- séque [η], l/g |
| 1 | 0,77 | 115 | 0,110 |
| 2 | 0,77 | 107 | 0,107 |
| 3 | 0,76 | 113 | 0,108 |
| 4 | 0,73 | 92 | 0,107 |
| 5 | 0,74 | 107 | 0,107 |
| 6 | 0,39 | 141 | 0,110 |
| 7 | 0,39 | 129 | 0,112 |

**Revendications**

1.  Procédé pour réduire le croûtage des réacteurs en cours de polymérisation du fluorure de vinylidène dans un milieu aqueux de mise en suspension à l'intervention d'un initiateur oléosoluble de la polymérisation radicalaire et en présence d'un agent de mise en suspension du type des éthers cellulosiques, caractérisé en ce que l'agent de mise en suspension est une méthylhydroxyéthylcellulose.

2. Procédé pour réduire le croûtage des réacteurs en cours de polymérisation du fluorure de vinylidène selon la revendication 1, caractérisé en ce que la méthylhydroxyéthylcellulose présente un nombre D.S. allant de 1,20 à 1,80 et un nombre M.S. allant de 0,10 à 0,30.

3. Procédé pour réduire le croûtage des réacteurs en cours de polymérisation du fluorure de vinylidène selon la revendication 2, caractérisé en ce que la méthylhydroxyéthylcellulose présente un nombre D.S. allant de 1,40 à 1,60 et un nombre M.S. allant de 0,13 à 0,27.

4. Procédé pour réduire le croûtage des réacteurs en cours de polymérisation du fluorure de vinylidène selon la revendication 1, caractérisé en ce que la méthylhydroxyéthylcellulose est mise en oeuvre à raison de 0,1 à 5 pour mille en poids par rapport à la quantité totale de monomère mise en oeuvre à la polymérisation.

5. Procédé pour réduire le croûtage des réacteurs en cours de polymérisation du fluorure de vinylidène selon la revendication 4, caractérisé en ce que la méthylhydroxyéthylcellulose est mise en oeuvre à raison de 0,2 à 2 pour mille en poids par rapport à la quantité totale de monomère mise en oeuvre à la polymérisation.

6. Procédé pour réduire le croûtage des réacteurs en cours de polymérisation du fluorure de vinylidène selon la revendication 1, caractérisé en ce que la méthylhydroxyéthylcellulose présente une viscosité à 20°C en solution aqueuse à 2 % comprise entre 15 et 4000 mPa.s.

7. Procédé pour réduire le croûtage des réacteurs en cours de polymérisation du fluorure de vinylidène suivant la revendication 6, caractérisé en ce que la méthylhydroxyéthylcellulose présente une viscosité à 20°C en solution aqueuse à 2 % comprise entre 35 et 1500 mPa.s.

8. Procédé pour réduire le croûtage des réacteurs en cours de polymérisation du fluorure de vinylidène suivant la revendication 1, caractérisé en ce que la méthylhydroxyéthylcellulose est mise en oeuvre en totalité au départ de la polymérisation en l'introduisant dans l'eau avant tous les autres ingrédients de la polymérisation.

9. Procédé pour réduire le croûtage en cours de polymérisation du fluorure de vinylidène selon la revendication 1, caractérisé en ce que l'initiateur oléosoluble est choisi parmi les peroxydicarbonates de dialkyles et les perpivalates de t-alkyle.

10. Procédé pour réduire le croûtage des réacteurs en cours de polymérisation du fluorure de vinylidène selon la revendication 9, caractérisé en ce que l'initiateur oléosoluble est choisi parmi les perpivalates de t-alkyle.

## Patentansprüche

1. Verfahren zum Vermindern der Krustenbildung in Reaktoren während der Suspensionspolymerisation in wässrigem Medium von Vinylidenfluorid mittels eines öllöslichen Initiators der Radikalpolymerisation und in Anwesenheit eines Suspensionsmittels vom Typ der Zelluloseether, dadurch gekennzeichnet, daß das Suspensionsmittel eine Methylhydroxyethylzellulose ist.

2. Verfahren zum Vermindern der Krustenbildung in Reaktoren während der Polymerisation von Vinylidenfluorid nach Anspruch 1, dadurch gekennzeichnet, daß die Methylhydroxyethylzellulose eine D.S.-Zahl von 1,20 bis 1,80 und eine M.S.-Zahl von 0,10 bis 0,30 aufweist.

3. Verfahren zum Vermindern der Krustenbildung in Reaktoren während der Polymerisation von Vinylidenfluorid nach Anspruch 2, dadurch gekennzeichnet, daß die Methylhydroxyethylzellulose eine D.S.-Zahl von 1,40 bis 1,60 und eine M.S.-Zahl von 0,13 bis 0,27 aufweist.

4. Verfahren zum Vermindern der Krustenbildung in Reaktoren während der Polymerisation von Vinylidenfluorid nach Anspruch 1, dadurch gekennzeichnet, daß die Methylhydroxyethylzellulose in einer Menge von 0,1 bis 5 Gew.-‰, bezogen auf die bei der Polymerisation eingesetzte Monomer-Gesamtmenge, eingesetzt wird.

**5.** Verfahren zum Vermindern der Krustenbildung in Reaktoren während der Polymerisation von Vinylidenfluorid nach Anspruch 4, dadurch gekennzeichnet, daß die Methylhydroxyethylzellulose in einer Menge von 0,2 bis 2 Gew.-‰, bezogen auf die bei der Polymerisation eingesetzte Monomer-Gesamtmenge, eingesetzt wird.

**6.** Verfahren zum Vermindern der Krustenbildung in Reaktoren während der Polymerisation von Vinylidenfluorid nach Anspruch 1, dadurch gekennzeichnet, daß die Methylhydroxyethylzellulose eine Viskosität bei 20°C in 2 % wässriger Lösung zwischen 15 und 4000 mPa.s. aufweist.

**7.** Verfahren zum Vermindern der Krustenbildung in Reaktoren während der Polymerisation von Vinylidenfluorid nach Anspruch 6, dadurch gekennzeichnet, daß die Methylhydroxyethylzellulose eine Viskosität bei 20°C in 2 % wässriger Lösung zwischen 35 und 1500 mPa.s. aufweist.

**8.** Verfahren zum Vermindern der Krustenbildung in Reaktoren während der Polymerisation von Vinylidenfluorid nach Anspruch 1, dadurch gekennzeichnet, daß die Methylhydroxyethylzellulose insgesamt bei Polymerisationsbeginn eingesetzt wird, indem sie in das Wasser vor allen anderen Polymerisationsbestandteilen eingeführt wird.

**9.** Verfahren zum Vermindern der Krustenbildung während der Polymerisation von Vinylidenfluorid nach Anspruch 1, dadurch gekennzeichnet, daß der öllösliche Initiator ausgewählt ist unter den Dialkylperoxydicarbonaten und den t-Alkyl-perpivalaten.

**10.** Verfahren zum Vermindern der Krustenbildung in Reaktoren während der Polymerisation von Vinylidenfluorid nach Anspruch 9, dadurch gekennzeichnet, daß der öllösliche Initiator ausgewählt ist unter den t-Alkyl-perpivalaten.

## Claims

**1.** Process for reducing the formation of buildup in reactors during polymerisation of vinylidene fluoride in an aqueous suspending medium with the involvement of an oil-soluble radical polymerisation initiator and in the presence of a suspending agent of the cellulose ether type, characterised in that the suspending agent is a methyl hydroxyethyl cellulose.

**2.** Process for reducing the formation of buildup in reactors during polymerisation of vinylidene fluoride according to Claim 1, characterised in that the methyl hydroxyethyl cellulose has a D.S. number ranging from 1.20 to 1.80 and an M.S. number ranging from 0.10 to 0.30.

**3.** Process for reducing the formation of buildup in reactors during polymerisation of vinylidene fluoride according to Claim 2, characterised in that the methyl hydroxyethyl cellulose has a D.S. number ranging from 1.40 to 1.60 and an M.S. number ranging from 0.13 to 0.27.

**4.** Process for reducing the formation of buildup in reactors during polymerisation of vinylidene fluoride according to Claim 1, characterised in that the methyl hydroxyethyl cellulose is used in a proportion of 0.1 to 5 parts per thousand by weight relative to the total quantity of monomer used in the polymerisation.

**5.** Process for reducing the formation of buildup in reactors during polymerisation of vinylidene fluoride according to Claim 4, characterised in that the methyl hydroxyethyl cellulose is used in a proportion of 0.2 to 2 parts per thousand by weight relative to the total quantity of monomer used in the polymerisation.

**6.** Process for reducing the formation of buildup in reactors during polymerisation of vinylidene fluoride according to Claim 1, characterised in that the methyl hydroxyethyl cellulose has a viscosity at 20°C in aqueous solution at a concentration of 2 % of between 15 and 4000 mPa s.

**7.** Process for reducing the formation of buildup in reactors during polymerisation of vinylidene fluoride according to Claim 6, characterised in that the methyl hydroxyethyl cellulose has a viscosity at 20°C in aqueous solution at a concentration of 2 % of between 35 and 1500 mPa s.

**8.** Process for reducing the formation of buildup in reactors during polymerisation of vinylidene fluoride according to Claim 1, characterised in that all the methyl hydroxyethyl cellulose is used at the beginning of the polymerisation by being introduced into the water before all the other ingredients of the polymerisation.

9. Process for reducing the formation of buildup during polymerisation of vinylidene fluoride according to Claim 1, characterised in that the oil-soluble initiator is chosen from dialkyl peroxydicarbonates and t-alkyl perpivalates.

10. Process for reducing the formation of buildup in reactors during polymerisation of vinylidene fluoride according to Claim 9, characterised in that the oil-soluble initiator is chosen from t-alkyl perpivalates.